# FASCICULE DE BREVET EUROPEEN

(11) **EP 3 999 766 B1**
(45) Date de publication et mention de la délivrance du brevet: **28.12.2022**
(21) Numéro de dépôt: 20750709.6
(22) Date de dépôt: 10.07.2020
(51) Int. Cl.: F16L 37/098, F16L 37/10, F16L 37/113

(54) **DISPOSITIF DE RACCORDEMENT FLUIDIQUE COMPACT ET DEMONTABLE**
KOMPAKTE UND DEMONTIERBARE FLUIDVERBINDUNG
COMPACT AND DEMOUNTABLE FLUID CONNECTION DEVICE

(30) Priorité: 15.07.2019 FR 1907930
(43) Date de publication de la demande: 25.05.2022
(73) Titulaire: A. Raymond et Cie, 38000 Grenoble (FR)
(72) Inventeur: GUIBERT, Kévin, 38000 GRENOBLE (FR)
(74) Mandataire: IP Trust
(86) Numéro de dépôt international: PCT/FR2020/051252
(87) Numéro de publication internationale: WO 2021/009454

(56) Documents cités:
- WO-A1-2017/093626
- CN-U- 204 358 318
- US-A1- 2016 238 171

## Description

### DOMAINE DE L'INVENTION

La présente invention concerne un dispositif de raccordement fluidique compact et démontable entre un équipement et un connecteur afin de facilement connecter un conduit de circulation de fluide. Ce type de dispositif trouve tout particulièrement son intérêt dans le domaine de l'automobile, et plus particulièrement dans le domaine du freinage.

### ARRIERE PLAN TECHNOLOGIQUE DE L'INVENTION

Il existe une grande variété de dispositifs de raccordement dans l'état de la technique entre un connecteur de type embout tubulaire à collet annulaire et un équipement présentant un passage traversant. La connexion entre ces deux éléments est souvent réalisée par l'utilisation d'une pièce supplémentaire pouvant se fixer sur l'équipement pour retenir le connecteur tubulaire.

De tels dispositifs sont ainsi connus des documents US20160025252, JP2007107580, US20050173923, JP2003194278, US6173994, US4915421, US4834423, US7118138, US5890749, US5799987, EP1797542, US5356183, WO2017093626, CN204358318U et US2016238171. Plus particulierment, le document WO2017093626 décrit un raccord tubulaire rapide, comportant un premier élément tubulaire avec un corps creux de connecteur définissant un orifice axial destiné à recevoir un second élément tubulaire pourvu d'une nervure circulaire, un verrou bloqué axialement dans le premier élément tubulaire et actionnable radialement pour libérer le second élément tubulaire du premier élément tubulaire et un système de sécurité qui s'oppose à la libération du second élément tubulaire, dans lequel que le système de sécurité est une bague flexible et sécable qui a une portion de périmètre à l'intérieur du premier élément tubulaire entre l'entrée de l'orifice du corps et le verrou pour assurer le blocage coaxial du second élément dans le premier élément malgré 1 ' actionnement du verrou, la bague ayant au moins une portion de périmètre sous forme de créneau sécable qui se projette à l'extérieur du corps.

Ces dispositifs présentent souvent l'inconvénient d'être encombrant ou de n'être pas facilement démontable ou nécessitent l'emploi d'un outil spécial de démontage ou nécessitent d'endommager l'un des éléments pour le démontage prévenant ainsi sa réutilisation.

### OBJET DE L'INVENTION

Un but de l'invention est de proposer un dispositif de raccordement compact et facilement démontable.

### BREVE DESCRIPTION DE L'INVENTION

En vue de la réalisation de ce but, sans sortir du cadre de l'invention tel que défini par les revendications, l'objet de l'invention propose un dispositif de raccordement d'un connecteur tubulaire définissant une direction longitudinale et pourvu d'un collet annulaire, à un équipement comportant un passage, le dispositif de raccordement comprenant :
- un embout de connexion au passage de l'équipement, l'embout de connexion étant formé d'un corps tubulaire surmonté d'une tête munie d'une ouverture débouchant dans le corps tubulaire et comprenant une rainure annulaire en ellipse;
- une bague de verrouillage dotée d'au moins deux pattes flexibles longitudinales destinées à être insérées dans l'embout de connexion et présentant chacune une section transverse conformée à une ellipse, une surface interne, une surface externe et une extrémité libre, la surface externe portant au moins un ergot destiné à se clipper dans la rainure annulaire pour maintenir la bague de verrouillage solidaire de l'embout de connexion, les deux pattes flexibles pouvant se déformer et se refermer sur le connecteur tubulaire lorsque le connecteur tubulaire est introduit longitudinalement dans la bague de verrouillage.

Selon d'autres caractéristiques avantageuses et non limitatives de l'invention, prises seules ou selon toute combinaison techniquement réalisable :
- le passage est circulaire et munie d'un filetage interne et le corps tubulaire est muni d'un filetage externe pour solidariser l'embout de connexion à l'équipement ;
- la tête de l'embout de connexion comprend des encoches pour recevoir les ergots ;
- les pattes flexibles présentent des pièces de butée agencées sur leurs surfaces internes ;
- les pattes flexibles sont disposées l'une en face de l'autre sur un petit axe de l'ellipse ;

### BREVE DESCRIPTION DES FIGURES

D'autres caractéristiques et avantages de l'invention ressortiront de la description détaillée de l'invention qui va suivre en référence aux figures annexées sur lesquels :
[Fig. 1a] La figure la représente, en vue éclatée, un assemblage comprenant un dispositif de raccordement conforme à un premier mode de réalisation, ce premier mode de réalisation n'étant pas couvert par le texte des revendications ;
[Fig. 1b] La figure 1b représente, en vue éclatée, un assemblage comprenant un dispositif de raccordement conforme à un deuxième mode de réalisation ;
[Fig. 2a] La figure 2a représente, en vue éclatée, un dispositif de raccordement conforme à un premier mode de réalisation non couvert par le texte des revendications ;
[Fig. 2b] La figure 2b représente, en vue éclatée, un dispositif de raccordement conforme à un deuxième mode de réalisation ;
[Fig. 3a] La figure 3a représente une vue en coupe d'un dispositif de raccordement conforme à un premier mode de réalisation de l'invention non couvert par le texte des revendications ;
[Fig. 3b] La figure 3a représente une vue en coupe d'un dispositif de raccordement conforme à un deuxième mode de réalisation de l'invention ;
[Fig. 4a]

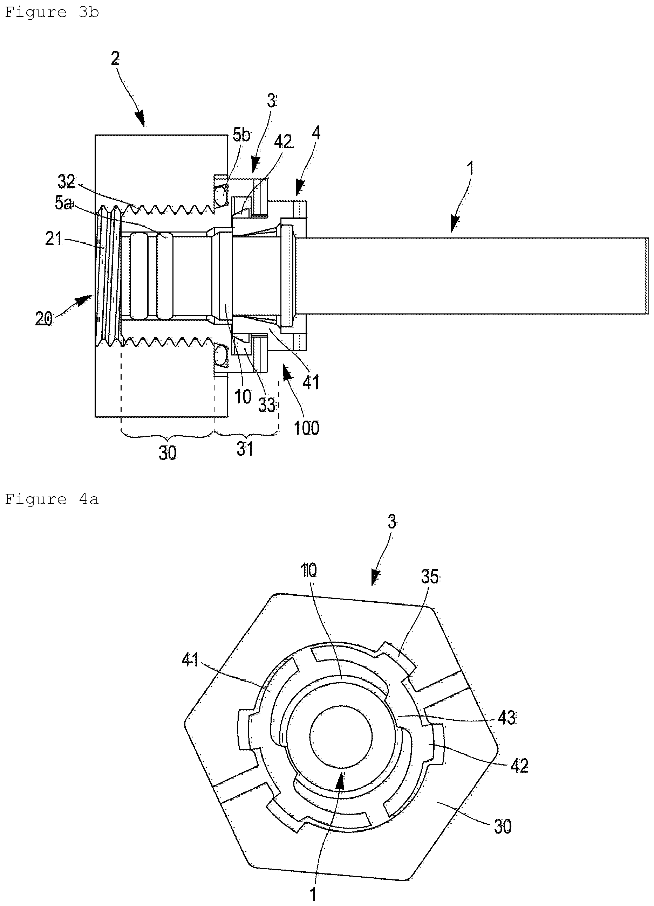

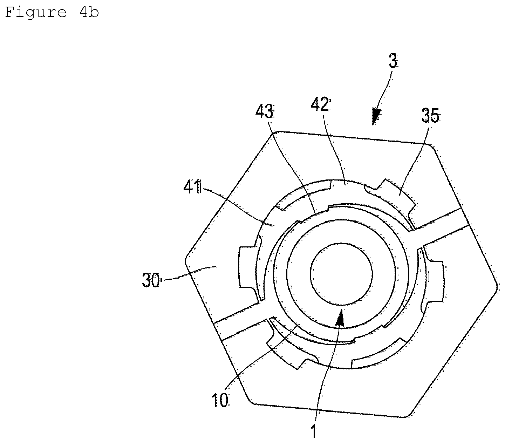

[Fig. 4b] Les figures 4a et 4b représentent respectivement le dispositif de raccordement conforme à un deuxième mode de réalisation dans une configuration fermée et une configuration ouverte ;

### DESCRIPTION DETAILLEE DE L'INVENTION

Par souci de simplification de la description à venir, les mêmes références sont utilisées pour des éléments identiques ou assurant la même fonction.

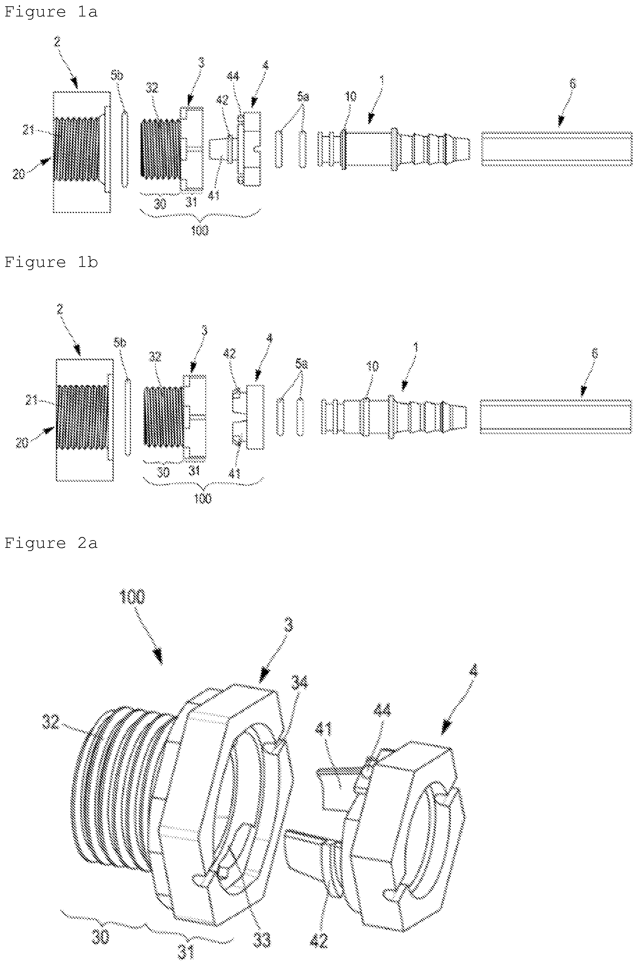

La figure la représente un assemblage comprenant un dispositif de raccordement selon un premier mode de réalisation non couvert par le texte des revendications et donné à titre d'exemple. La figure 1b représente, en vue éclatée, un assemblage comprenant un dispositif de raccordement 100 conforme à un deuxième mode de réalisation selon la présente invention.

Le dispositif de raccordement 100 est destiné à raccorder fluidiquement, de manière démontable, un conduit 6 à un équipement 2. A cet effet, l'équipement 2 comporte un passage 20 ici circulaire et muni d'un filetage interne 21. Le fluide peut être un liquide ou un gaz, tel que de l'air comprimé.

Le conduit 6 est relié à une première extrémité d'un connecteur tubulaire 1, par exemple par l'intermédiaire d'un mécanisme du type « queue sapin ». Le connecteur tubulaire 1 est pourvu d'un collet annulaire 10 du côté de sa seconde extrémité destinée à être insérée dans le dispositif de raccordement 100. Le connecteur tubulaire 1 définit une direction longitudinale. L'équipement 2 et/ou le connecteur tubulaire 1 portent avantageusement des joints d'étanchéités 5a, 5b, permettant de réaliser une liaison étanche entre eux. Ainsi, sur les exemples représentés, on a prévu deux premiers joints d'étanchéité 5a disposés dans des gorges annulaires du connecteur tubulaire 1, en amont de son collet 10 selon le sens d'insertion. On a également prévu un deuxième joint 5b entre le dispositif de raccordement 100 et l'équipement 2, logé dans une gorge aménagée à cet effet dans le passage 20 de l'équipement 2. Il est également envisageable de prévoir des joints d'étanchéité, à la place ou en complément de ceux représentés sur les figures, dans le dispositif de raccordement 100 lui-même.

### Description générale du dispositif de raccordement

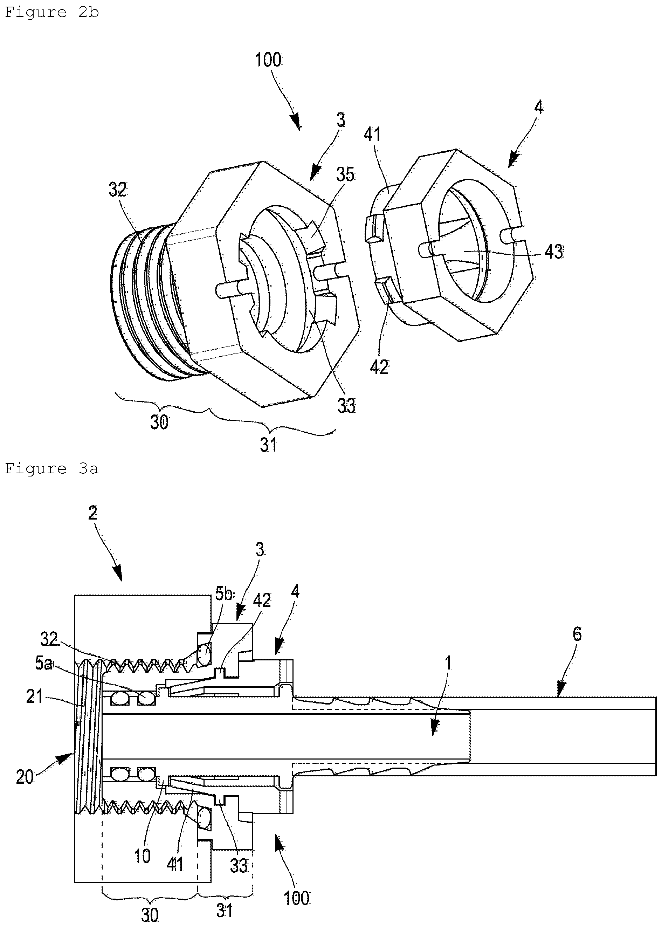

La figure 2a et la figure 2b représentent une vue éclatée du dispositif de raccordement 100 comprenant un embout de connexion 3 ainsi qu'une bague de verrouillage 4, respectivement conforme à un premier et à un deuxième mode de réalisation, ce premier mode de réalisation n'étant pas couvert par le texte des revendications. La bague de verrouillage 4 et l'embout de connexion 3 sont destinés à être assemblés l'un à l'autre.

L'embout de connexion 3 est formé d'un corps tubulaire 30 surmontée d'une tête 31. La tête 31 est munie d'une ouverture débouchant dans le corps tubulaire 30. Le corps tubulaire 30 comprend sur sa surface externe un filetage externe 32 configuré pour coopérer avec le filetage interne 21 de l'équipement 2 et ainsi permettre de fixer l'embout de connexion 3 à cet équipement. Toute autre forme de fixation entre ces deux éléments est possible. Lorsque l'embout de connexion 3 est convenablement assemblé, ici par vissage, à l'équipement 2, la tête 31 est en butée contre une surface d'appui de l'équipement 2 et reste accessible depuis l'extérieur pour permettre par exemple son désassemblage. A cet effet, la tête 31 de l'embout de connexion 3 présente une forme configurée pour être manipulée avec un outil qui peut être très conventionnel. La tête 10 a ici une forme hexagonale afin de pouvoir être saisie par un outil du type clé plate.

Le corps 30 de l'embout de connexion 3 présente une section transversale dont le diamètre interne correspond sensiblement au diamètre externe du connecteur 1, afin de permettre leur raccordement. Comme cela est plus visible sur les figures 3a, 3b, le corps 30 présente un épaulement interne afin de créer une butée pour le collet 10 et ainsi limiter l'enfoncement du connecteur 1 dans l'embout de connexion 3.

La tête 31 de l'embout de connexion 3 comprend sur sa surface interne des moyens de retenue 33 pour retenir la bague de verrouillage 4 dont on fera une description détaillée ultérieurement en référence à chacun des modes de réalisation.

De manière avantageuse, l'embout de connexion 3 est de nature métallique, par exemple en laiton.

D'une manière générale, la bague de verrouillage 4 est destinée à retenir le connecteur tubulaire 1 assemblé à l'embout de connexion 3 lorsque le connecteur tubulaire 1 est introduit longitudinalement dans le dispositif de raccordement 100 pour relier fluidiquement le conduit 6 à l'équipement 2.

La bague de verrouillage 4 présente une partie principale dotée d'au moins deux pattes flexibles longitudinales 41 destinées à être insérées dans l'embout de connexion 3. Ces pattes flexibles 41 présentent chacune une surface interne, une surface externe ainsi qu'une extrémité libre. La surface externe porte au moins un ergot 42 destiné à interagir avec les moyens de retenue 33 de l'embout 3 pour assembler ces deux éléments ensemble. Dans cette configuration, les pattes flexibles 41 restent libres de se déformer dans un espace aménagé dans l'embout 3. La partie principale de la bague 4 dépasse de l'embout 3 ce qui la rend facilement accessible depuis l'extérieur pour être manipulée, par exemple pour permettre le démontage de la bague. Tout comme la tête 31 de l'embout 3, la partie principale de la bague de verrouillage 4 présente une forme configurée pour être manipulée avec un outil qui peut être très conventionnel, ici une forme hexagonale également.

Lorsque le connecteur tubulaire 1 est introduit longitudinalement dans le dispositif de raccordement 100, les pattes flexibles 41 de la bague de verrouillage 4 peuvent ainsi se déformer pour laisser progresser le collet 10 et se refermer sur celui-ci. On place ainsi le collet 10 entre des butées formées des extrémités libres des pattes flexibles et de l'épaulement interne de l'embout de connexion 3.

La bague de verrouillage 4 peut être formée d'un matériau plastique.

### Description et fonctionnement du premier mode de réalisation

Dans le premier mode de réalisation illustré sur les figures 2a et 3a, les moyens de retenue 33 correspondent à deux crans 33 disposés en vis-à-vis l'un de l'autre et dans lesquels les ergots 42 de la bague 4 peuvent s'engager. Il est ainsi possible d'assurer l'assemblage de la bague de verrouillage 4 à l'embout de connexion 3 en insérant les pattes flexibles longitudinales 41 dans l'embout 3 puis en engageant les ergots 42 dans les crans 33, par rotation de la bague 4. Tout mouvement longitudinal de la bague de verrouillage 4 est alors prévenu dans cette configuration.

De manière avantageuse, les ergots 42 forment des nervures 42 s'étendant sur toute la largeur des pattes flexibles 41. Les crans 33 présentent des dimensions complémentaires à celle des nervures 42. Cela a pour effet d'améliorer la résistance à l'arrachement de la bague de verrouillage 4 de l'embout de connexion 3.

De manière optionnelle, pour faciliter son assemblage à l'embout 3, la bague de verrouillage 4 peut comprendre au moins un pion d'indexation 44. Ce pion est destiné à glisser sur la face avant de la tête 31 lorsque la bague est insérée sur l'embout 3 et entrainée en rotation, et à se loger dans une rainure d'indexation 34 de la tête 31 lorsque les ergots 42 sont bien engagés dans les crans 33. Deux pions d'indexation 44 et deux rainures d'indexation 34 sont ici disposés de manière à présenter un décalage angulaire d'environ 90° avec les pattes flexibles 41, mais il est tout à fait envisageable de choisir tout autre décalage angulaire.

L'assemblage du dispositif de raccordement 100 selon le premier mode de réalisation comprend plusieurs étapes.

Une première étape correspond à l'assemblage de la bague de verrouillage 4 à l'embout de connexion 3. A cet effet, les pattes flexibles 41 de la bague de verrouillage 4 sont insérées dans l'embout de connexion 3 en orientant angulairement la bague 4 de sorte que les pattes flexibles 41 ne soient pas alignées avec les crans 33.

Une deuxième étape correspond au verrouillage de la bague 4 à l'embout de connexion 3. Pour cela on applique une rotation à la bague 4 pour faire coulisser les ergots 42 par rotation dans les crans 33. Le bon verrouillage de l'assemblage est confirmé par le logement des pions d'indexation 44 dans les rainures d'indexation 34 de la tête 31.

Une troisième étape, qui peut être réalisée avant la première étape ou après la deuxième étape, correspond à la fixation, par vissage, de l'embout de connexion 3 à l'équipement 2 par le biais de leur filetage respectif 32 et 21.

La quatrième et dernière étape correspond à l'insertion du connecteur tubulaire 1 dans le dispositif de raccordement 100 afin de réaliser la liaison fluidique entre le conduit 6 et l'équipement 2. Lors de l'insertion du connecteur 1, son collet 10 vient en appui contre les pattes flexibles 41 ce qui tend à les déformer. Une fois la traversée du collet 10 terminée, par exemple en butée contre l'épaulement interne de l'embout de connexion 3, les pattes flexibles 41 reprennent leurs positions initiales, et se referment sur le connecteur 1. Dans cette configuration, illustrée sur la figure 3a, le collet 10 vient en butée contre l'extrémité des pattes flexibles 41 si l'on tente de l'extraire du dispositif de raccordement 100.

Pour démonter le dispositif de raccordement 100 du premier mode de réalisation, il suffit d'utiliser un outil conventionnel, par exemple une clé plate, pour appliquer une rotation à la bague de verrouillage 4 et extraire les ergots 42 des crans 33. On peut alors retirer la bague de verrouillage 4 de l'embout de connexion 3. A l'issue de l'étape de démontage, l'embout tubulaire 1, toujours muni de la bague de verrouillage 4, peut alors être désassemblé de l'équipement 2.

### Description et fonctionnement du deuxième mode de réalisation

Dans le deuxième mode de réalisation, représenté sur les figures 1b, 2b et 3b, les moyens de retenue de l'embout 3 sont formés par une rainure annulaire 33 présente sur toute la périphérie de la surface interne de la tête 31. Les ergots 42 des pattes flexibles 41 peuvent se clipser dans cette rainure annulaire 33 lors de l'insertion de la bague de verrouillage 4 dans l'embout de connexion 3. La surface interne des pattes flexibles 41 est munie d'une pièce de butée 43 présentant des rampes de glissement orientées vers l'ouverture de la bague et destinée à faciliter l'introduction de l'élément tubulaire 1.

Comme cela est bien visible sur la figure 2b, la tête 31 de l'embout de connexion 3 comprend des encoches 35 pour recevoir les ergots 42 des pattes flexibles 41. Les encoches 35 présentent chacune un plan incliné pour faciliter le clippsage de la bague 4 et l'insertion des ergots 4 dans la rainure annulaire 33. Le nombre et la disposition de ces encoches 35 correspondent au nombre d'ergots 42 présent sur la bague de verrouillage 4, soit ici quatre encoches 35, les deux pattes 41 comprenant chacune deux ergots 42. De manière avantageuse, les ergots 42 sont disposés à proximité de l'extrémité des pattes flexibles 41 afin de faciliter leurs déformations.

Dans ce mode de réalisation, la rainure annulaire 33 est de forme elliptique, et présente un grand axe et un petit axe. Les pattes flexibles 41 de la bague de verrouillage 4 présentent une section transverse conformée à une ellipse de dimension sensiblement égale à celle de la rainure 33. Les pattes flexibles 41 sont disposées à chaque extrémité du petit axe de l'ellipse. La rainure annulaire 33 n'entrave pas la rotation de la bague 4 et permet le libre coulissement des ergots 42 dans la rainure 33 lorsque la bague 4 est entrainée en rotation. Au cours de ce coulissement, les pièces de butée 43 s'écartent et se rapproche l'une de l'autre selon que les pattes flexibles sont disposées dans le grand axe ou le petit axe de l'ellipse de la rainure annulaire 33. Ce mécanisme permet de sélectivement fermer ou ouvrir les pièces de butée 43 sur le collet 10 du connecteur tubulaire 1.

L'assemblage du dispositif de raccordement 100 selon le deuxième mode de réalisation comprend des étapes similaires à celles décrites en relation avec le premier mode de réalisation.

Il comprend notamment la fixation par vissage de l'embout de connexion 3 à l'équipement 2 par le biais de leur filetage respectif 32 et 21.

Au cours de la première étape d'assemblage de la bague 4 à l'embout de connexion 3, les pattes flexibles 41 de la bague 4 sont insérées dans l'embout de connexion 3 de sorte que les ergots 42 soient alignés avec les encoches 35. Une force de pression est ensuite appliquée sur la bague 4 pour forcer la déformation des pattes 41, par interaction des ergots 42 avec les flancs inclinés des encoches 35, et clipser ces ergots 42 dans la rainure annulaire 33. Dans cette position d'assemblage, les pattes flexibles 41 sont maintenues rapprochées l'une de l'autre de sorte que la distance séparant les pièces de butées 43, disposées sur les surfaces internes de ces pattes, soit inférieure au diamètre du collet 10. Les pattes flexibles 41 restent toutefois libres de se déformer pour permettre l'introduction du collet 10 de l'embout tubulaire 1. A l'issue de cette étape, la bague 4 est donc solidaire de l'embout de connexion 3 et ne peut plus en être retirée. Le dispositif de raccordement 100 est alors dans une configuration dite « fermée ».

Lors de l'insertion du connecteur 1, son collet 10 vient en appui contre les pattes flexibles 41, et notamment sur les rampes de glissement des pièces de butée 43, ce qui tend à déformer ces pattes pour les écarter l'une de l'autre. Une fois la traversée du collet 10 terminée, par exemple en butée contre l'épaulement interne de l'embout de connexion 3, les pattes flexibles 41 reprennent leurs positions initiales, et se referment sur le connecteur 1. Dans cette configuration, illustrée sur les figures 3b et 4a, le collet 10 vient en butée contre l'extrémité des pièces de butée 43 portées par les pattes flexibles 41, si l'on tente de l'extraire du dispositif de raccordement 100.

Pour démonter le dispositif de raccordement 100, on applique une rotation, d'environ 90° dans l'exemple représenté, sur la bague de verrouillage 4. Cette rotation de la bague 4 entraine les ergots dans la rainure 33 elliptique en direction du grand axe de cette rainure, ce qui tend à relâcher la déformation des pattes flexibles 41 pour qu'elles s'écartent l'une de l'autre en épousant la forme elliptique de la rainure. Dans cette configuration dite « ouverte » et illustrée par la figure 4b, la distance séparant les pièces de butées 43, disposées sur les surfaces internes de pattes 41, est supérieure au diamètre du collet 10. Ces pièces ne sont donc plus en butée sur le collet 10 du connecteur 1. Il est donc ainsi possible de désassembler le connecteur tubulaire 1 du connecteur femelle 2 tout en gardant la bague 4 assemblée à l'embout de connexion 3.

Dans ce deuxième mode de réalisation, on peut désassembler le connecteur tubulaire 1 de l'équipement 2 tout en laissant assemblé le dispositif de raccordement 100.

Bien entendu l'invention n'est pas limitée aux modes de mise en œuvre décrits et on peut y apporter des variantes de réalisation sans sortir du cadre de l'invention tel que défini par les revendications.

En particulier, bien qu'ici on ait indiqué que la bague de verrouillage 4 comporte deux pattes flexibles 41, il est tout à fait possible d'adapter le dispositif de raccordement 100 pour comprendre un nombre plus important de pattes flexibles 41. On pourra similairement adapter le nombre d'ergots 33 et leurs dispositions sur les pattes flexibles, ainsi que l'angle de rotation permettant le démontage de l'embout 1 ou de la bague 4.

## Revendications

1. Dispositif de raccordement (100) d'un connecteur tubulaire (1) définissant une direction longitudinale et pourvu d'un collet annulaire (10) à un équipement (2) comportant un passage (20), le dispositif de raccordement (100) comprenant :
- un embout de connexion (3) au passage (20) de l'équipement (2), l'embout de connexion (3) étant formé d'un corps tubulaire (30) surmonté d'une tête (31) munie d'une ouverture débouchant dans le corps tubulaire (30) et comprenant une rainure annulaire (33) en ellipse;
- une bague de verrouillage (4) dotée d'au moins deux pattes flexibles longitudinales (41) destinées à être insérées dans l'embout de connexion (3) et présentant chacune une section transverse conformée à une ellipse, une surface interne, une surface externe et une extrémité libre, la surface externe portant au moins un ergot (42) destiné à se clipper dans la rainure annulaire (33) pour maintenir la bague de verrouillage (4) solidaire de l'embout de connexion (3), les deux pattes flexibles (41) pouvant se déformer et se refermer sur le connecteur tubulaire (1) lorsque le connecteur tubulaire (1) est introduit longitudinalement dans la bague de verrouillage (4) .

2. Dispositif de raccordement (100) selon la revendication précédente dans lequel le passage (20) est circulaire et munie d'un filetage interne (21) et le corps tubulaire (30) est muni d'un filetage externe (32) pour solidariser l'embout de connexion (3) à l'équipement (2).

3. Dispositif de raccordement (100) selon l'une des revendications précédentes dans lequel la tête (31) de l'embout de connexion (3) comprend des encoches (35) pour recevoir les ergots (42).

4. Dispositif de raccordement (100) selon l'une des revendications précédentes dans lequel les pattes flexibles (41) présentent des pièces de butée agencées sur leurs surfaces internes.

5. Dispositif de raccordement selon l'une des revendications précédentes dans lequel les pattes flexibles (41) sont disposées l'une en face de l'autre sur un petit axe de l'ellipse.

## Patentansprüche

1. Vorrichtung (100) zum Anschließen eines rohrförmigen Verbinders (1), der eine Längsrichtung definiert und mit einem ringförmigen Bund (10) ausgestattet ist, an eine Einrichtung (2), die einen Durchgang (20) aufweist, die Anschlussvorrichtung (100) umfassend:
- ein Verbindungsendstück (3) an dem Durchgang (20) der Einrichtung (2), wobei das Verbindungsendstück (3) aus einem rohrförmigen Körper (30) ausgebildet ist, der von einem Kopf (31) überragt wird, der mit einer Öffnung versehen ist, die in den rohrförmigen Körper (30) mündet, und umfassend eine ringförmige Nute (33) in Ellipsenform;
- einen Verriegelungsring (4), der über mindestens zwei flexible Längslaschen (41) verfügt, die dazu bestimmt sind, in das Verbindungsendstück (3) eingeführt zu werden, und die jeweils einen Querschnitt, der an eine Ellipse angepasst ist, eine Innenoberfläche, eine Außenoberfläche und ein freies Ende aufweisen, wobei die Außenoberfläche mindestens einen Vorsprung (42) trägt, der dazu bestimmt ist, in die ringförmige Nute (33) zum Festhalten des Verriegelungsrings (4) an dem Verbindungsendstück (3) einzuklipsen, wobei die zwei flexiblen Laschen (41) sich auf dem rohrförmigen Verbinder (1) verformen und verschließen können, wenn der rohrförmige Verbinder (1) längs in den Verriegelungsring (4) eingebracht wird.

2. Anschlussvorrichtung (100) nach dem vorstehenden Anspruch, wobei der Durchgang (20) kreisförmig und mit einem Innengewinde (21) versehen ist und der rohrförmige Körper (30) mit einem Außengewinde (32) versehen ist, um das Verbindungsendstück (3) an der Einrichtung (2) zu befestigen.

3. Anschlussvorrichtung (100) nach einem der vorstehenden Ansprüche, wobei der Kopf (31) des Verbindungsendstücks (3) Aussparungen (35) zum Aufnehmen der Vorsprünge (42) umfasst.

4. Anschlussvorrichtung (100) nach einem der vorstehenden Ansprüche, wobei die flexiblen Laschen (41) Anschlagstücke aufweisen, die auf ihren Innenoberflächen eingerichtet sind.

5. Anschlussvorrichtung nach einem der vorstehenden Ansprüche, wobei die flexiblen Laschen (41) einander gegenüberliegend auf einer Nebenachse der Ellipse angeordnet sind.

## Claims

1. Connection device (100) for connecting a tubular connector (1) that defines a longitudinal direction and is provided with an annular collar (10) to an apparatus (2) comprising a passage (20), the connection device (100) comprising:
- a connection end fitting (3) connecting to the passage (20) of the apparatus (2), the connection end fitting (3) being formed of a tubular body (30) and a head (31) mounted thereon provided with an opening leading into the tubular body (30) and comprising an elliptical annular groove (33);
- a locking ring (4) provided with at least two flexible longitudinal tabs (41) intended to be inserted into the connection end fitting (3) and each having an elliptical-shaped cross section, an inner surface, an outer surface, and a free end, the outer surface having at least one lug (42) intended to clip into the annular groove (33) to keep the locking ring (4) securely connected with the connection end fitting (3), the two flexible tabs (41) being capable of deforming and closing on the tubular connector (1) when the tubular connector (1) is introduced longitudinally into the locking ring (4).

2. Connection device (100) according to the preceding claim, wherein the passage (20) is circular and provided with an inner thread (21), and the tubular body (30) is provided with an outer thread (32) to secure the connection end fitting (3) to the apparatus (2).

3. Connection device (100) according to any of the preceding claims, wherein the head (31) of the connection end fitting (3) comprises notches (35) for receiving the lugs (42).

4. Connection device (100) according to any of the preceding claims, wherein the flexible tabs (41) have stop pieces arranged on the inner surfaces thereof.

5. Connection device according to any of the preceding claims, wherein the flexible tabs (41) are arranged opposite each other on a minor axis of the ellipse.
